# EUROPÄISCHE PATENTSCHRIFT

(11) **EP 1 736 281 B1**
(45) Veröffentlichungstag und Bekanntmachung des Hinweises auf die Patenterteilung: **26.11.2008**
(21) Anmeldenummer: 06015736.9
(22) Anmeldetag: 24.10.2003
(51) Int. Cl.: B24B 13/00

(54) **Vorrichtung zum Herstellen von optischen Gläsern**
Device for producing optical glasses
Dispositif de production de verres optiques

(30) Priorität: 25.10.2002 DE 10250856
(43) Veröffentlichungstag der Anmeldung: 27.12.2006
(62) Teilanmeldung aus: 03809324.1
(73) Patentinhaber: Carl Zeiss Vision GmbH, 73430 Aalen (DE)
(72) Erfinder: Kübler, Christoph, 73447 Oberkochen (DE); Köhle, Thomas, 73432 Aalen-Ebnat (DE); Kaaz, Manfred, 73447 Oberkochen (DE); Bess, Christian, 73432 Aalen-Ebnat (DE)
(74) Vertreter: Witte, Alexander

(56) Entgegenhaltungen:
- EP-A1- 0 656 242
- WO-A-01/56740

## Beschreibung

Die Erfindung betrifft eine Vorrichtung zum Herstellen von optischen Gläsern, bei der zum Polieren einer ersten Oberfläche eines Glases ein Polierwerkzeug vorgesehen ist, das einerseits mit einer rotierenden zweiten Oberfläche tangential über die erste Oberfläche geführt und andererseits zum Kompensieren unterschiedlicher Erhebungen in der ersten Oberfläche in einer Richtung senkrecht zu der ersten Oberfläche zugestellt wird, mit einer rotatorisch angetriebenen, axial festen Hülse, und mit einem in der Hülse angeordneten, axial zustellbaren, mit der Hülse drehmoment-übertragend verbundenen Element, das an seinem aus der Hülse heraus ragenden freien Endabschnitt mit dem Polierwerkzeug verbunden ist und über ein nicht Drehmoment übertragendes Übertragungselement an eine lineare Verstelleinheit angeschlossen ist.

Die Erfindung wird nachstehend an Hand einer Anwendung bei Brillengläsern beschrieben. Es versteht sich jedoch, dass die Erfindung auch bei anderen optischen Gläsern eingesetzt werden kann.

Es ist bekannt, dass so genannte Einstärkenbrillengläser durch zwei sphärische bzw. eine sphärische und eine torische Fläche bestimmt sind. Zur Optimierung der Rand-und der Mittendicke der Einstärkenbrillengläser kann eine rotationssymmetrische asphärische Funktion auf einer der beiden Seiten des Brillenglases der Sphäre bzw. dem Torus überlagert werden.

Dem gegenüber besitzen so genannte Gleitsicht- oder Mehrstärkenbrillengläser mindestens eine optische Freiformfläche, die mittels Optimierungsprogrammen berechnet wird. Die Freiformfläche ist nicht-rotationssymmetrisch. Sie befindet sich üblicherweise auf der Vorderseite des Brillenglases. Die so genannte Rezeptfläche befindet sich üblicherweise hingegen auf der torischen Rückseite des Brillenglases und ist an die optischen Kennwerte des Brillenträgers angepasst.

Kunststoff-Gleitsichtgläser werden durch Abgießen erzeugt. Bei diesem Herstellprinzip ist die optische Freiformfläche durch den Abgießprozess bereits hergestellt. Silicatbrillengläser werden hingegen über eine iterative Prozessfolge aus Schleifen und Polieren hergestellt.

Die torische Rezeptbearbeitung wird mittels im Stand der Technik bekannter Schleif-und Poliermaschinen durchgeführt.

Im Stand der Technik sind ferner Brillengläser bekannt, deren optische Eigenschaften für jedes Brillenglas individuell berechnet und optimiert werden. Derartige bekannte Brillengläser besitzen daher mindestens eine individuell berechnete optische Fläche in einer Splinedarstellung. Die Fertigung dieser individuellen optischen Flächen wird üblicherweise bei nicht-rotationssymmetrischen Kunststoffbrillengläsern mittels einer Diamantdrehtechnik durchgeführt. Derartige Drehmaschinen sind aus der WO 97/13603 sowie der EP 0 758 571 B1 bekannt. Diese bekannten Diamantdrehmaschinen arbeiten mit einer automatischen Bestückung der Brillengläser in Verbindung mit einem Förderband. Die Brillengläser werden in geblockter Form in Auftragsbehältern transportiert.

Wenn Gleitsichtgläser aus Kunststoff in ihrer Oberfläche mittels Diamantdrehtechnik hergestellt werden, weisen sie nach Beendigung des Drehprozesses noch eine regelmäßige Rillenstruktur der Oberfläche auf. Diese liegt in einem Bereich von 80 bis 200 nm rms Oberflächenrauigkeit. Diese gedrehten optischen Flächen müssen zum Erzielen der erforderlichen Endrauigkeit von weniger als 10 nm rms noch poliert werden. Schließlich muss noch eine so genannte Signatur angebracht werden. Hierunter versteht man einerseits eine Markierung zur Typenkennzeichnung, andererseits aber auch das Anbringen von zwei Marken auf jedem Brillenglas, mit denen die optische Achse definiert wird und die dem Optiker beim lagegerechten Einpassen in ein Brillengestell helfen.

Da beim Poliervorgang Späne abgehoben werden, müssen die polierten Flächen vor dem anschließenden Signiervorgang noch von den Spänen und vom Poliermittel gereinigt und anschließend getrocknet werden.

Eine Poliermaschine, wie sie im genannten Zusammenhang eingesetzt werden kann, ist in der WO 01/56740 A1 beschrieben.

Zum Polieren von gedrehten oder geschliffenen Freiformflächen verwendet man in der Praxis Polierwerkzeuge, bei denen eine Polierfläche als Einmalpolierbelag ausgebildet ist. Die Polierfläche wird von einem elastischen Schaum gehalten, so dass die Polierfläche sich der Form des Brillenglases anpassen kann. Die Polierfläche ist dabei entweder konvex oder konkav ausgebildet, je nachdem, ob konkave oder konvexe Brillenglasoberflächen poliert werden sollen.

Nach jedem Poliervorgang wird der verbrauchte Einmalpolierbelag vom Polierwerkzeug abgelöst und durch einen frischen Polierbelag ersetzt. Nach dem Ablösen des verbrauchten Polierbelages wird das Polierwerkzeug gereinigt und getrocknet.

Beim anschließenden Signieren der Brillengläser wird die bereits erwähnte Markierung üblicherweise mittels eines Laserstrahls punktweise, d.h. als Punktmuster, in die Brillenglasoberfläche eingebracht.

Allen vorstehend beschriebenen bekannten Vorrichtungen zum Polieren, Waschen und Signieren ist gemeinsam, dass die Brillengläser einzeln, meistens manuell, zugeführt werden.

Aus der WO 02/00392 A1 ist eine Vorrichtung zum Laden und Entladen optischer Werkstücke bekannt. Die bekannte Vorrichtung wird vorzugsweise im Zusammenhang mit einer Schleifmaschine für optische Einzellinsen eingesetzt. Bei der bekannten Vorrichtung werden die Brillengläser mittels eines Saugkopfes gehandhabt, der auf der optischen Oberfläche der Brillengläser aufsetzt. Zwar wird auch vorgeschlagen, einen pneumatisch betriebenen Drei-Finger-Greifer einzusetzen, dieser soll jedoch lediglich zum Zentrieren der Brillengläser verwendet werden.

Aus der US 6,247,999 B1 ist ein Verfahren zum automatischen Wechseln von Polierwerkzeugen bekannt. Bei dem bekannten Verfahren wird eine Mehrzahl von Polierwerkzeugen in einer Reihe auf einer Magazinbank bereitgehalten. Ein Roboter ergreift eines der Polierwerkzeuge und befestigt dies an einer kardanischen Aufhängung für das Polierwerkzeug am Antriebselement der Poliermaschine. Nach Beendigung des Poliervorganges fährt der Roboter mit dem Polierwerkzeug in eine Vorrichtung ein, in der zwei schräg zur Horizontale geneigte Bleche einen Spalt zwischen sich einschließen. Der Roboter fährt mit dem Polierwerkzeug in den Spalt ein und streift diesen dort ab, wobei das verbrauchte Polierwerkzeug nunmehr in die von der Vorrichtung gebildete Schräge hinein fällt und nach unten in einen Aufnahmebehälter gelangt.

Aus der EP 0 567 894 A1 ist eine Vorrichtung zur Führung eines Werkstücks oder Werkzeugs bei der Bearbeitung torischer oder sphärischer Flächen optischer Linsen auf Schleif- oder Poliermaschinen bekannt.

Bei dieser bekannten Vorrichtung befindet sich am unteren freien Ende einer Pinole ein Rollbalg, der einen Polierteller hält. In dem von dem Rollbalg umschlossenen Raum kann ein Luftdruck erzeugt werden, so dass der Polierteller axial ausgelenkt werden kann. Außerdem ist der Polierteller mittels eines axial wirkenden Kolbens über ein Kugelgelenk gehalten. Der Rollbalg dient zum Übertragen eines Drehmoments für den im Betrieb gedrehten Polierteller.

Diese bekannte Vorrichtung hat den Nachteil, dass der Rollbalg ein relativ steifes Gebilde ist, so dass eine Eigenbewegung des Poliertellers nur in eng begrenztem Umfange möglich ist.

Aus der EP 0 974 423 A1 ist ein weiterer ähnlicher Polierteller bekannt, bei dem das Polierwerkzeug mittels eines Bajonettverschlusses an einem Betätigungselement befestigt werden kann.

Diese bekannte Vorrichtung hat den Nachteil, dass zum Befestigen des Polierwerkzeuges eine winkelgenaue Ausrichtung relativ zum Betätigungselement erforderlich ist.

Eine weitere, ähnliche Vorrichtung ist aus der EP 0 974 422 A1 bekannt.

Aus der WO 01/56740 A1 ist ein Polierkopf für eine Poliermaschine bekannt, die zum Polieren von Brillengläsern eingesetzt wird. Bei diesem Polierkopf ist ein Hohlzylinder um seine Mittelachse rotatorisch antreibbar. In die Innenoberfläche des Hohlzylinders ist drehfest und koaxial ein Lagerelement eingewetzt. In diesem Lagerelement ist wiederum koaxial eine Antriebswelle gelagert, und zwar derart, dass die Antriebswelle in dem Lagerelement axial zustellbar ist, sie aber gleichzeitig drehmomentübertragend mit dieser verbunden ist, indem die entsprechenden Radiallager zwischen Lagerelement und Antriebswelle im Radialschnitt mehreckig ausgebildet sind. Die Antriebswelle trägt an ihrem unten aus dem Hohlzylinder heraus ragenden Endabschnitt ein Polierwerkzeug. Die Antriebswelle ist ferner mittels einer Kolben-Zylinder-Anordnung axial zustellbar, wobei diese Kolben-Zylinder-Anordnung raumfest in dem Hohlzylinder gelagert ist, sich also sich nicht mit diesem dreht.

Die Antriebswelle ist massiv ausgebildet. Sie wird mittels der Kolben-Zylinder-Einheit derart zugestellt, dass der Anpressdruck des rotierenden Polierwerkzeugs auf der zu polierenden Oberfläche des Brillenglases konstant ist, wenn nicht-rotationssymmetrische Oberflächen poliert werden und der Polierkopf in einer Schwenkbewegung in radialer Richtung über die zu polierende Oberfläche hinweg bewegt wird.

Aus der EP 0 567 894 A1 ist eine Vorrichtung zur Führung eines Werkstücks oder Werkzeugs bei der Bearbeitung torischer oder sphärischer Flächen optischer Linsen auf Schleif- oder Poliermaschinen bekannt. Bei dieser Vorrichtung wird eine stationäre, primäre Kolben-Zylinder-Anordnung verwendet, deren Kolben an seinem unteren freien Ende mit einem Rollbalg-Halter für einen Linsenträger versehen ist. Mit der primären Kolben-Zylinder-Anordnung kann der Linsenträger an das unterhalb des Linsenträgers befindliche Schleif- oder Polierwerkzeug herangefahren werden. In dem Kolben befindet sich im Bereich des freien Endes noch eine sekundäre Kolben-Zylinder-Anordnung, die mit der primären Kolben-Zylinder-Anordnung verbunden ist. Die Anordnung ist dabei so getroffen, dass bei Einleitung eines Druckmediums in die Kolben-Zylinder-Anordnungen und in den Innenraum des Rollbalges ein konstanter Anpressdruck der Linse an dem Werkzeug erreicht wird, unabhängig von der absoluten axialen Position des Kolbens.

Die Kolben der primären und der sekundären Kolben-Zylinder-Anordnungen sind jeweils mit axialen Durchgangsbohrungen versehen, um einen Durchfluss des Druckmediums zu ermöglichen.

Aus der EP 0 656 242 A1 ist eine Bearbeitungseinheit für eine automatische Werkzeugmaschine bekannt, bei der sich eine kegelförmige Werkzeugaufnahme am freien Ende einer rohrförmigen Spindel und diese sich innerhalb eines hohlen Körpers befindet.

Der Erfindung liegt die Aufgabe zugrunde, eine Vorrichtung der eingangs genannten Art dahingehend weiterzubilden, dass eine hohe axiale Beweglichkeit des Polierwerkzeugs erreicht wird.

Bei einer Vorrichtung der eingangs genannten Art wird diese Aufgabe erfindungsgemäß dadurch gelöst, dass das Element hohl ausgebildet das Übertragungselement kugelig gelagert ist.

Die der Erfindung zugrunde liegende Aufgabe wird auf diese Weise vollkommen gelöst.

Die Erfindung hat den Vorteil, dass die während des Poliervorganges zu bewegenden Massen des Polierwerkzeuges sehr klein gehalten werden können. Auf diese Weise wird die Massenträgheit reduziert, und die polierende Oberfläche kann der Oberfläche des zu polierenden Glases in besonders leichter Weise folgen, wobei nur minimale Kräfte aufgebracht werden müssen.

Die Erfindung hat ferner den Vorteil, dass die axiale Zustellbewegung des Polierwerkzeugs unabhängig von der Drehmomentübertragung für die rotatorische Bewegung des Polierwerkzeugs verkantungsfrei ausgeführt werden kann. Die zum axialen Verstellen notwendigen Elemente sind von der Drehmomentübertragung entkoppelt und können ihrerseits reibungsarm ausgebildet werden.

In diesem Zusammenhang ist besonders bevorzugt, wenn das Element ein Rohr ist.

Diese Maßnahme hat den Vorteil, dass ein sehr einfaches und kostengünstig herstellbares Element Verwendung findet.

In bevorzugter Weiterbildung dieses Ausführungsbeispiels ist das Rohr ein Mehrkantrohr, das mittels Wälzlagern radial gelagert ist.

Diese Maßnahme hat den Vorteil, dass das Rohr in seiner axialen Zustellbewegung nahezu reibungsfrei gelagert ist, weil Wälzlager ein radiales Ausweichen des Mehrkantrohrs bei geringstmöglicher Reibung verhindern.

Zur Übertragung des Drehmomentes kann das Rohr als Mehrkantrohr, als unrundes Rohr oder als Rohr mit einer Keilverzahnung oder dergleichen ausgebildet werden.

In bevorzugter Weise ist die lineare Verstelleinheit als Kolben-Zylinder-Einheit ausgebildet.

Diese Maßnahme hat den Vorteil, dass auf bewährte Stell- und Regelelemente zurückgegriffen werden kann.

In diesem Zusammenhang ist weiter bevorzugt, wenn das Übertragungselement eine Koppelstange ist, die vorzugsweise an beiden Enden kugelig gelagert ist.

Diese Maßnahmen haben den Vorteil, dass die bereits erwähnte nicht Drehmoment übertragende Verbindung hergestellt wird, wobei die kugelige Lagerung weiterhin verhindert, dass sich der Kolben im Zylinder in Folge einer Schrägstellung der polierenden Oberfläche verkantet.

Bei einer weiteren bevorzugten Ausführungsform der Erfindung weist die Kolben-Zylinder-Einheit einen in einem Zylinder luftgelagerten Kolben auf.

Diese Maßnahme hat den Vorteil, dass eine besonders reibungsarme Anordnung entsteht, weil der Kolben in dem Zylinder über ein Luftlager geführt wird. Infolge dessen lässt sich die Andrückkraft des Polierwerkzeuges, d.h. die Polierkraft, besonders feinfühlig einstellen.

In diesem Fall ist besonders bevorzugt, wenn der Zylinder ein Glaszylinder und der Kolben ein Graphitkolben ist.

Diese Maßnahme hat den Vorteil, dass eine optimale Reibpaarung vorhanden ist, die über weite Temperaturbereiche betrieben werden kann.

Weiterhin wird eine besonders gute Wirkung in diesem Fall dann erzielt, wenn die Kolben-Zylinder-Einheit mit einem Druckluft enthaltenden Arbeitsspeicher eines ersten vorbestimmten Volumens verbunden ist, wobei der Kolben im Zylinder zwischen seinen extremen Arbeitsstellungen ein zweites vorbestimmtes Volumen definiert und das erste Volumen wesentlich größer als das zweite Volumen ist, vorzugsweise mindestens 100 mal, insbesondere mindestens 1.000 mal so groß wie das zweite Volumen, und besonders bevorzugt das erste Volumen etwa 1 cm³ und das zweite Volumen etwa 3.000 cm³ beträgt.

Diese Maßnahme hat den Vorteil, dass das System über den gesamten Arbeitshub des Kolbens extrem linear arbeitet, weil die Volumenänderung im Arbeitszylinder erheblich kleiner als das Volumen des Druckspeichers ist.

Bei einer weiteren bevorzugten Ausführungsform der Erfindung tritt die Hülse zum Ausführen der Zustellbewegung im Betrieb mit einem das Polierwerkzeug tragenden Abschnitt oszillierend aus einem Ende des Gehäuses aus, und es ist ferner zwischen dem Ende und dem Abschnitt ein erster Balg angeordnet.

Diese Maßnahme hat den Vorteil, dass das oszillierend bewegte Übertragungselement optimal gegen das Eindringen von Schmutz geschützt ist. Dies ist von besonderem Vorteil im vorliegenden Anwendungsfall, weil beim Polieren der Oberfläche des Glases eine erhebliche Verschmutzung eintritt, so dass die Führung des oszillierenden Übertragungselementes sich nach und nach mit einem Abrieb des Polierwerkzeugs zusetzen könnte.

Bei einer bevorzugten praktischen Ausführungsform dieses Ausführungsbeispiels trägt der Abschnitt einen ringförmigen Flansch, und der erste Balg verbindet den Flansch mit dem Ende.

Diese Maßnahme hat den Vorteil, dass ein besonders einfacher und mechanisch zuverlässiger Aufbau entsteht.

Bei einer weiteren bevorzugten Ausführungsform der Erfindung tritt die Hülse im Betrieb mit einem das Polierwerkzeug tragenden Abschnitt oszillierend aus einem Ende des Gehäuses aus, und der Abschnitt ist mit einer gehäusefesten Schutzhülse umgeben.

Diese Maßnahme hat den Vorteil, dass eine ungewollte Beschädigung des oszillierend austretenden Abschnitts des Übertragungselementes sicher verhindert wird.

Wenn in bevorzugter Weiterbildung dieses Ausführungsbeispiels die Schutzhülse den ersten Balg umschließt, wird diese Schutzfunktion auch auf den ersten Balg ausgeübt.

Bei einer weiteren bevorzugten Ausführungsform der Erfindung ist das Polierwerkzeug an einem in Zustellrichtung entlang einer Achse bewegbaren Übertragungselement gelenkig gelagert, und es ist ein Taumelteller vorgesehen, der über ein Kugelgelenk mit dem Übertragungselement verbunden ist, wobei der Taumelteller mit dem Polierwerkzeug koppelbar ist.

Diese Maßnahme hat den Vorteil, dass der kugelig gelagerte Taumelteller es in besonders perfekter Weise ermöglicht, den unterschiedlichen Erhebungen der zu schleifenden Oberfläche des Glases zu folgen. Dies gilt insbesondere im Vergleich zu den im Stand der Technik bekannten kardanischen Aufhängungen (US 5,247,999) und vor allem einer Lagerung mittels eines Rollbalgs (EP 0 567 894 A1), aber auch im Vergleich zu einem Kugelinbusgelenk (WO 01/56740 A1, DE 101 00 860 A1).

Bei dem vorgenannten Ausführungsbeispiel der Erfindung ist bevorzugt, wenn das Übertragungselement in einem Kugelkopf ausläuft, wobei das Polierwerkzeug eine Kugelpfanne aufweist, und das Polierwerkzeug elastisch an dem Übertragungselement gehalten ist, wobei ferner der Kugelkopf elastisch in der Kugelpfanne gehalten wird, derart, dass das Polierwerkzeug eine Taumelbewegung relativ zum Übertragungselement ausführen kann.

Diese Maßnahme hat den Vorteil, dass einerseits eine Taumelbewegung des Polierwerkzeugs möglich ist und andererseits über die elastische Halterung einerseits das erforderliche Drehmoment auf das Polierwerkzeug übertragen werden kann, andererseits aber das Kugelgelenk auch mit der erforderlichen Lagerkraft zusammengehalten wird.

Bei einer bevorzugten Weiterbildung dieses Ausführungsbeispiels läuft das Übertragungselement axial in einem Finger aus, und der Kugelkopf ist am freien Ende des Fingers angeordnet.

Diese Maßnahme hat den Vorteil, dass in Folge der auskragenden Anordnung des aus Kugelkopf und Kugelpfanne bestehenden Kugelgelenks eine Taumelbewegung mit besonders großer Auslenkung möglich ist.

Ferner ist bei diesen Ausführungsbeispielen bevorzugt, wenn zum elastischen Halten des Polierwerkzeugs ein zweiter, Drehmoment übertragender Balg zwischen dem Übertragungselement und dem Polierwerkzeug angeordnet ist.

Diese Maßnahme hat zum einen den Vorteil, dass auch das Kugelgelenk in der bereits erwähnten Weise zuverlässig gegen Verschmutzung geschützt ist, die beim Poliervorgang auftritt, andererseits kann die elastische Halterung und damit die Drehmomentübertragung sowie die Haltekraft im Kugelgelenk mit einem besonders einfachen und kostengünstig erhältlichen Element, nämlich einem Balg, gewährleistet werden.

Dies gilt in bevorzugter Weise auch dann, wenn der zweite Balg den Finger umgibt.

Schließlich ist in diesem Zusammenhang bevorzugt, wenn die Kugelpfanne kegelig ausgebildet ist.

Diese Maßnahme hat den Vorteil, dass nur eine sehr kleine Kontaktfläche zwischen Kugelkopf und Kugelpfanne, im Idealfall nur eine Kontaktlinie, besteht, so dass das Gelenk sehr reibungsarm ist.

Bei einer weiter bevorzugten Ausführungsform der Erfindung ist das Polierwerkzeug über eine magnetische Kupplung mit einem Antrieb verbunden.

Diese Maßnahme hat den Vorteil, dass keinerlei mechanische Kupplung gelöst bzw. geschlossen werden muss, um das Polierwerkzeug mit seinem Antrieb zu verbinden. Vielmehr kann die magnetische Kupplung auf einfache Weise geöffnet und geschlossen werden. Dies kann entweder auf elektrischem Wege geschehen oder dadurch, dass die magnetisch gekoppelten Elemente durch Aufbringen einer Zugkraft von einander gelöst werden.

Bei einer bevorzugten Weiterbildung dieses Ausführungsbeispiels weist die magnetische Kupplung Permanentmagnete auf.

Diese Maßnahme hat den Vorteil, dass die Kupplung ohne Stromzuführung arbeitet. Die Permanentmagnete können dabei entweder als Paar von Permanentmagneten eingesetzt werden oder als Permanentmagnet mit einem zugehörigen Stück Weicheisen.

Bei diesem Ausführungsbeispiel ist weiter eine Ausführungsform bevorzugt, bei der das Polierwerkzeug einerseits mit einer rotierenden zweiten Oberfläche tangential über die erste Oberfläche geführt und andererseits zum Kompensieren unterschiedlicher Erhebungen in der ersten Oberfläche in einer Richtung senkrecht zu der ersten Oberfläche zugestellt wird, wobei das Polierwerkzeug an einem in Zustellrichtung entlang einer Achse bewegbaren Übertragungselement gelenkig gelagert ist und ein Taumelteller vorgesehen ist, der über ein Kugelgelenk mit dem Übertragungselement verbunden ist, wobei der Taumelteller mit dem Polierwerkzeug über die magnetische Kupplung gekoppelt ist.

Diese Maßnahme hat den Vorteil, dass in einem praktischen Ausführungsbeispiel das Polierwerkzeug in einfachster Weise an seine zugehörige Antriebseinheit, nämlich den Taumelteller, angekoppelt und davon wieder abgekoppelt werden kann, so dass das Polierwerkzeug lediglich aus einem Polierteller und einem Polierbelag bestehen muss.

Auch im vorgenannten Fall ist bevorzugt, wenn das Übertragungselement in einem Kugelkopf ausläuft, das Polierwerkzeug eine Kugelpfanne aufweist und das Polierwerkzeug elastisch an dem Übertragungselement gehalten ist, wobei der Kugelkopf in der Kugelpfanne elastisch gehalten wird, derart, dass das Polierwerkzeug eine Taumelbewegung relativ zum Übertragungselement ausführen kann.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:
- Fig. 1: ein Flussdiagramm zur Erläuterung eines Verfahrens zum Herstellen von optischen Gläsern nach dem Stand der Technik;
- Fig. 2: ein Flussdiagramm, ähnlich Fig. 1;
- Fig. 3: eine äußerst schematisierte Draufsicht auf ein Ausführungsbeispiel einer erfindungsgemäßen Vorrichtung;
- Fig. 4: eine Seitenansicht, entlang der Linie IV-IV von Fig. 3;
- Fig. 5: in stark vergrößertem Maßstab eine Seitenansicht, teilweise im Schnitt, einer Hand eines Roboters, wie er in der Vorrichtung gemäß den Fig. 3 und 4 Verwendung findet;
- Fig. 6: in weiter vergrößertem Maßstab einen Ausschnitt aus der Hand gemäß Fig. 5 zur Erläuterung weiterer Einzelheiten;
- Fig. 7: in weiter vergrößertem Maßstab ein Detail aus Fig. 6, darstellend einen Luftzylinder;
- Fig. 8: in weiter vergrößertem Maßstab eine Detaildarstellung aus Fig. 6, darstellend einen Taumelteller;
- Fig. 9: in weiter vergrößertem Maßstab eine Detaildarstellung aus Fig. 6, darstellend ein Polierwerkzeug;
- Fig. 10 und 11: zwei perspektivische Ansichten der in den Fig. 8 und 9 dargestellten Elemente Taumelteller und Polierwerkzeug;
- Fig. 12: eine schematisierte Seitenansicht, teilweise im Schnitt, eines Greifers, wie er in der Hand des Roboters gemäß Fig. 5 verwendet werden kann;
- Fig. 13 bis 17: schematisierte Draufsichten auf die Anordnung gemäß Fig. 12, für fünf unterschiedliche Ausführungsbeispiele;
- Fig. 18: eine äußerst schematisierte Seitenansicht eines Werkzeugmagazins, wie es bei einer Vorrichtung gemäß Fig. 3 und 4 Verwendung finden kann;
- Fig. 19: eine Draufsicht auf das Werkzeugmagazin gemäß Fig. 18;
- Fig. 20: eine Schnittdarstellung entlang der Linie XX-XX von Fig. 19;
- Fig. 21: in stark vergrößertem Maßstab eine Draufsicht auf ein Glas, das mit der erfindungsgemäßen Vorrichtung bearbeitet wird;
- Fig. 22: ein detailliertes Flussdiagramm.

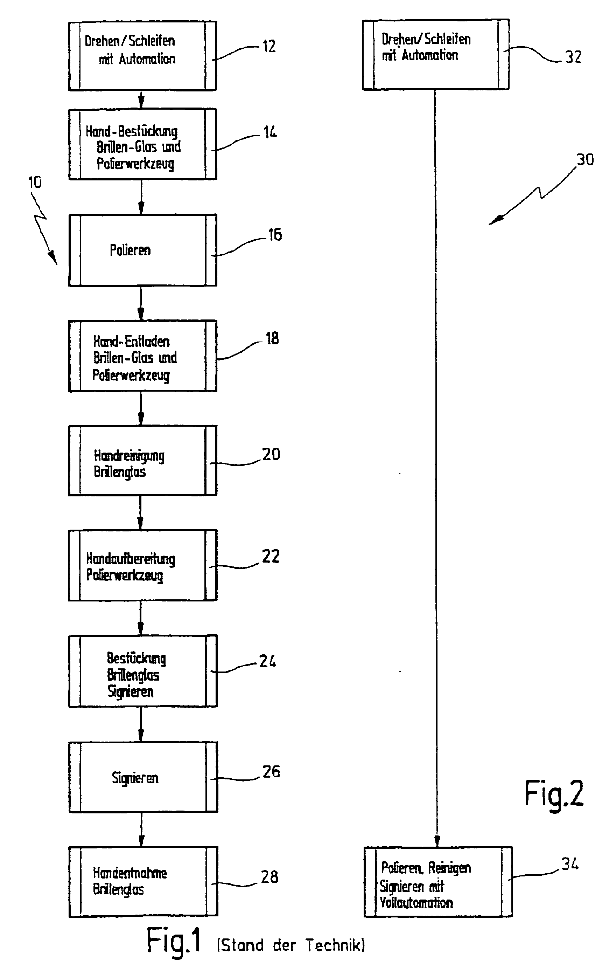

In Fig. 1 bezeichnet 10 ein Flussdiagramm zur Erläuterung eines Arbeitsverfahrens nach dem Stand der Technik. Nach dem Drehen bzw. Schleifen eines Brillenglases (Block 12) werden sowohl das Brillenglas wie auch ein Polierwerkzeug von Hand in einer Poliermaschine bestückt (Block 14). Die Poliermaschine führt dann den Poliervorgang aus (Block 16). Das polierte Brillenglas wird nun entladen und das Polierwerkzeug entnommen (Block 18).

Das Brillenglas muss nun entweder von Hand oder mit einer speziellen Waschvorrichtung gereinigt werden (Block 20), und das Polierwerkzeug und/oder das Waschwerkzeug muss von Hand oder mittels einer speziellen Vorrichtung aufbereitet werden (Block 22). Das Brillenglas wird nun einer Signierstation von Hand zugeführt (Block 24) und dort signiert (Block 26). Erst dann kann das Brillenglas von Hand entnommen (Block 28) und weiter transportiert werden.

Aus der vorstehenden Darstellung wird deutlich, dass die herkömmlichen Verfahren einen sehr hohen Zeitaufwand erfordern, weil eine Fülle manueller Vorgänge ablaufen muss, was einerseits Zeit kostet, andererseits aber auch eine Fehlerquelle ist.

Im Gegensatz dazu zeigt Fig. 2 ein Flussdiagramm 30, bei dem zunächst in herkömmlicher Weise die automatische Formbearbeitung des Brillenglases mittels Drehen oder Schleifen vorausgeht (Block 32), dann aber sämtliche nachfolgenden Schritte des Polierens, Reinigens und Signierens vollautomatisch ablaufen (Block 34), ohne dass ein manueller Eingriff erforderlich ist. Dies soll nachstehend beschrieben werden:

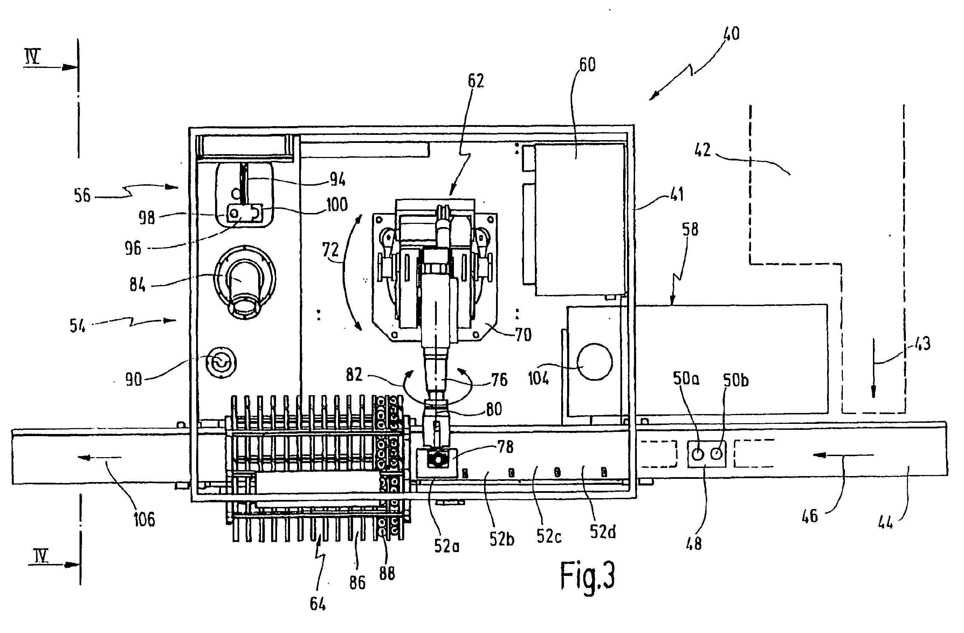

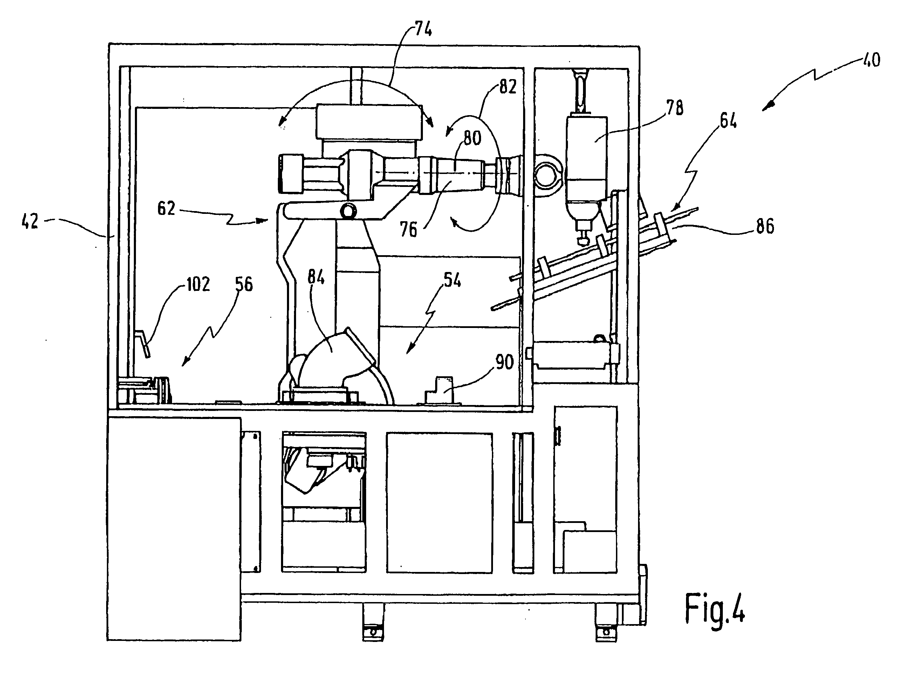

In Fig. 3 und 4 bezeichnet 40 eine Fertigungszelle mit einem Gehäuserahmen 41. In der Fertigungszelle 40 laufen die Vorgänge des Polierens, Waschens und Signierens vollautomatisch ab.

Von einer herkömmlichen Dreh- oder Schleifmaschine 42 werden die Gläser in Richtung eines Pfeils 43 einem Förderband 44 zugeführt, wo sie in einer mit einem Pfeil 46 angedeuteten Förderrichtung zur Fertigungszelle 40 transportiert werden.

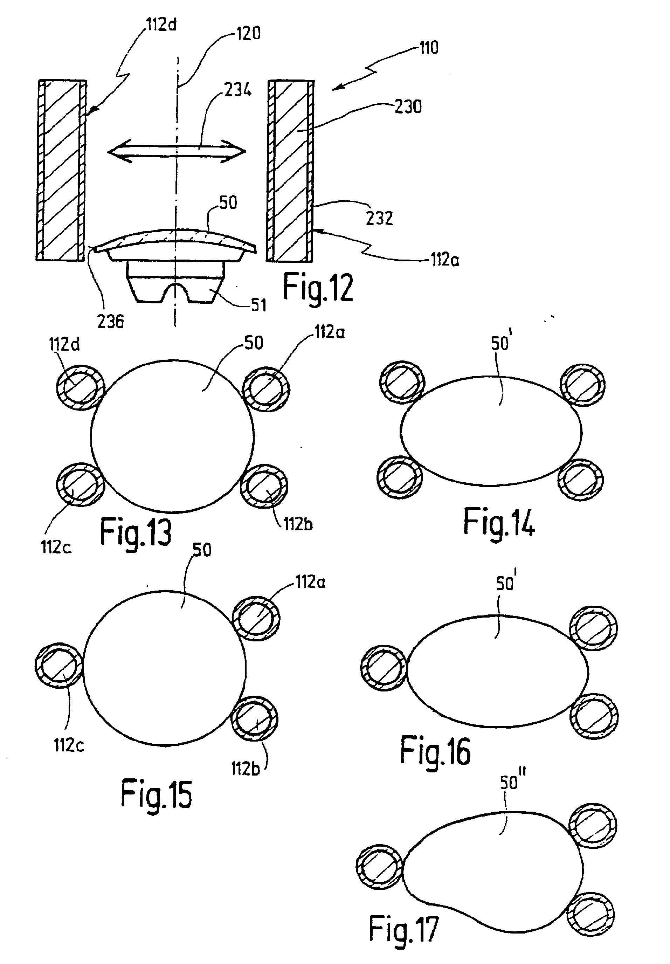

Zum Transport werden Transportkisten 48 auf dem Förderband 44 verwendet. In jeder Transportkiste 48 befindet sich ein Paar Gläser 50a, 50b, die jeweils einem bestimmten Patienten bzw. Kunden zugeordnet sind. Wie weiter unten noch erläutert werden wird (Fig. 12), sind die Gläser 50 in an sich bekannter Weise auf einem Block 51 angeordnet, damit sie während der Bearbeitung leichter gehalten und bewegt (gedreht) werden können.

Auf dem Förderband 44 sind in der Fertigungszelle 40 im dargestellten Ausführungsbeispiel vier Handhabungspositionen 52a, 52b, 52c und 52d angedeutet. Auf diesen Positionen 52a bis 52d kann jeweils eine Transportkiste 48 angehalten werden. Dies ermöglicht es, die Gläser 50 in definierter Position bereit zu halten, damit auch Gläser 50 aus unterschiedlichen Transportkisten 48 parallel in den verschiedenen Stationen der Fertigungszelle 40 bearbeitet werden können.

Die Fertigungszelle 40 enthält eine Polierstation 54, eine Waschstation 56, eine Signierstation 58 sowie ein zentrales Steuergerät 60. Als zentrales Arbeitsmittel ist in der Fertigungszelle 40 ein Roboter 62 vorgesehen, der mit einem Werkzeugmagazin 64 zusammenarbeitet.

Der Roboter 60 steht auf einer Basis 70. Mit Pfeilen 72 und 74 sind einige Bewegungsmöglichkeiten des Roboters 62 angedeutet. Bei einem bevorzugten Ausführungsbeispiel der Erfindung ist der Roboter 62 ein Sechs-Arm-Roboter.

Der Roboter 62 weist einen Arm 76 auf, an dessen freiem Ende sich eine Hand 78 befindet. Die Hand 78 ist um eine entlang des Arms 76 verlaufende Achse 80 drehbar, wie mit einem weiteren Pfeil 82 angedeutet.

Die Fertigungszelle 40 arbeitet wie folgt:

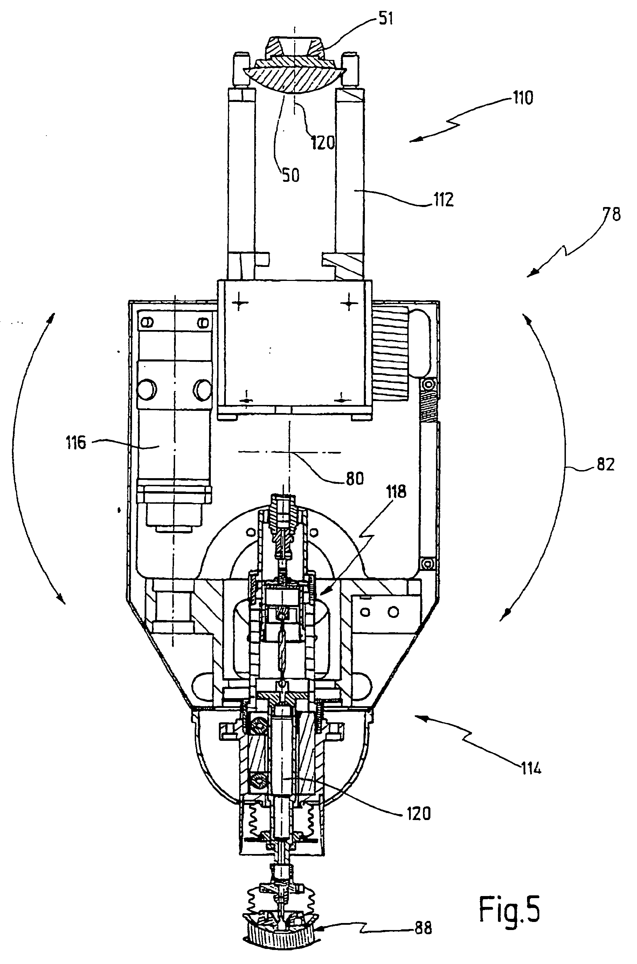

Zu Beginn eines Bearbeitungsvorganges wird der Roboter 62 so betätigt, dass ein an der Hand 78 befindlicher Greifer ein Glas 50 aus einer Transportkiste 48 übernimmt. Einzelheiten des Greifers werden weiter unten an Hand der Fig. 5 und 12 bis 17 noch erläutert werden.

Der Roboter 62 überführt das Glas 50 nun zu einer Polierspindel 84 in der Polierstation 54. In der Polierspindel 84 wird das Glas 50 mit seinem Block 51 in eine Aufnahme der Polierspindel 84 eingesetzt, so dass das Glas 50 gedreht werden kann.

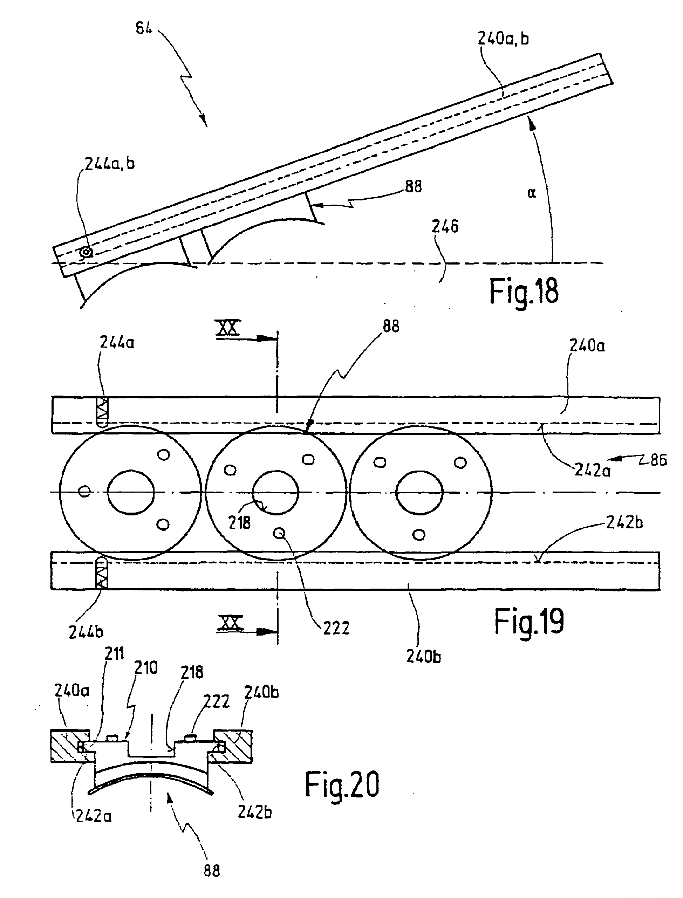

Nach dem Absetzen des Glases 50 in der Polierspindel 84 fährt der Roboter 62 die Hand 78 zum Werkzeugmagazin 64. Dort sind in Schächten 86 Polierwerkzeuge 88 gelagert. Es können z.B. Polierwerkzeuge 88 unterschiedlicher Größe in den verschiedenen Schächten 86 sortiert sein. Weitere Einzelheiten zum Werkzeugmagazin 64 werden weiter unten an Hand der Fig. 18 bis 20 noch erläutert werden.

Da es sich bei Polierwerkzeugen 88 um Verschleißteile handelt, die nach einem Poliervorgang aufgearbeitet werden müssen, ist es erforderlich, im Werkzeugmagazin 64 eine genügend große Anzahl von Polierwerkzeugen 88 bereit zu halten, beispielsweise so viele Polierwerkzeuge, wie für eine Tagesproduktion erforderlich sind.

Zur Aufnahme des Polierwerkzeugs 88 wird die Hand 78 des Roboters 62 um die Achse 80 verdreht, damit das jeweilige Polierwerkzeug 88 aufgenommen werden kann. Einzelheiten dazu werden weiter unten an Hand der Fig. 5 bis 11 noch erläutert werden.

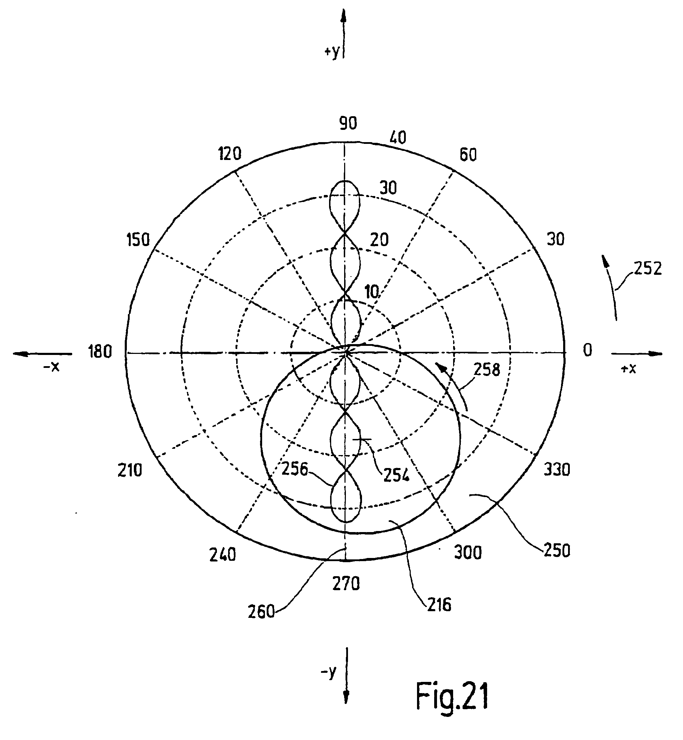

Der Roboter 62 kehrt nun mit dem an der Hand 78 befindlichen Polierwerkzeug 88 zur Polierstation 54 zurück und fährt dort in einen die Polierspindel 84 umgebenden Kragen ein, bis das Polierwerkzeug 88 mit seiner Polieroberfläche in Anlage an die zu polierende Oberfläche des Glases 50 gelangt. Einzelheiten des Poliervorganges werden weiter unten noch beschrieben werden, insbesondere in Verbindung mit Fig. 21.

Wenn der Poliervorgang beendet ist, fährt die Hand 78 mit dem Polierwerkzeug 88 aus der Polierspindel 84 heraus. Das Polierwerkzeug 88 wird nun zu einem Abwurfmagazin 90 verfahren. Hier wird das Polierwerkzeug 88 von der Hand 78 abgezogen, indem das Polierwerkzeug 88 gegen einen hintergreifenden Anschlag fährt und die Hand 78 dann vom Polierwerkzeug 88 weg gefahren wird. Das Polierwerkzeug 88 fällt dann in einen mit Reinigungsflüssigkeit befüllten Behälter des Abwurfmagazins 90.

Der Roboter 62 kehrt nun mit der Hand 78 zur Polierstation 54 zurück und übernimmt dort das polierte, jedoch in Folge des Poliervorganges verschmutzte Glas 50. Er überführt dieses nun zur Waschstation 56, und zwar zu einem dort befindlichen Halter 94.

Der Roboter 62 löst sich nun mit seiner Hand 78 vom Glas 50 und ergreift einen in einer Wanne 96 der Waschstation 56 befindlichen Schwamm 98, um anschließend das polierte Glas 50 zu reinigen. Zu diesem Zweck kann das Glas 50 im Halter 94 fest gehalten oder auch bewegt werden.

Nach Beendigung des Waschvorganges wird der Schwamm 98 in einer Absetzvorrichtung 100 wieder in der Wanne 96 abgesetzt. Dies kann wiederum durch einen hintergreifenden Anschlag und eine Abziehbewegung der Hand geschehen.

Zur Unterstützung des Waschvorganges ist eine Mehrzahl von Düsen vorgesehen, von denen eine in Fig. 4 bei 102 angedeutet ist. Über die Düsen 102 wird eine Waschflüssigkeit, beispielsweise Wasser, und anschließend ein Trocknungsmedium, beispielsweise Pressluft, zugeführt.

Nach dem Absetzen des Schwammes 98 fährt der Roboter 62 mit der Hand 78 wieder zu dem nunmehr gewaschenen und getrockneten Glas 50 und übernimmt dieses aus dem Halter 94. Der Roboter 62 überführt das Glas nun zu einem Signierhalter 104 in der Signierstation 58. Dort wird das Glas 50 beispielsweise mittels eines Lasers signiert, d.h. mit einer bestimmten Typennummer, aber auch mit Marken auf der optischen Fläche versehen, die es dem Optiker später gestatten, das Brillenglas exakt in ein Brillengestell einzupassen.

Während der Roboter 62 sowohl in der Polierstation wie auch in der Waschstation aktiv an den dortigen Arbeitsschritten des Polierens und Waschens teilnahm, ist eine derartige Aktivität in der Signierstation 58 nicht erforderlich, weil das Glas 50 dort lediglich auf dem Signierhalter 104 abgesetzt wurde und im Übrigen das Signieren automatisch und ohne Einbeziehung des Roboters 62 abläuft.

Da andererseits der Signiervorgang einige Zeit in Anspruch nimmt, kann in bevorzugter Weiterbildung der Erfindung der Roboter 62 während dieser Zeit bereits das nächste Glas 50 aus seiner Transportkiste 48 entnehmen und daran die zuvor beschriebenen Schritte des Polierens und Waschens ausführen. Es ist auch denkbar, dass auch bereits ein übernächstes Glas in dieser Weise gehandhabt und bearbeitet wird, bis das erste Glas fertig signiert ist und dann mittels des Roboters 62 wieder vom Signierhalter 104 abgenommen und in seine Transportkiste 48 zurück gelegt werden kann.

Die Transportkisten 48 mit den fertig bearbeiteten Gläsern 50 verlassen nun die Fertigungszelle 40 auf dem Förderband 44 in Richtung des in Fig. 3 eingezeichneten Pfeils 106.

Die Fig. 5 bis 17 zeigen weitere Einzelheiten der an der Hand 78 befindlichen Elemente.

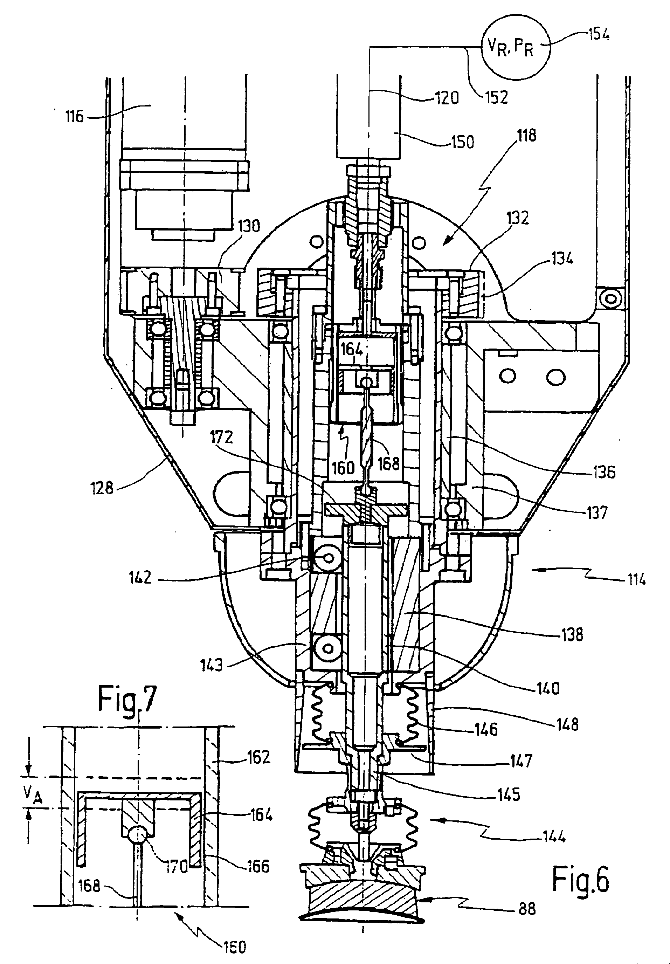

Fig. 5 zeigt in einer Seitenansicht die senkrecht zur Zeichenebene der Fig. 6 verlaufende Achse 80 des Armes 76 sowie die mit dem Pfeil 82 angedeutete Verschwenkbewegung der Hand 78 um jeweils vorzugsweise 180°. Es versteht sich an dieser Stelle, dass an der Hand 78 selbstverständlich auch eine größere Anzahl von Einheiten in entsprechend kleineren Winkelabständen vorgesehen sein kann.

In der Darstellung gemäß Fig. 5 befindet sich am oberen Ende der Hand 78 ein Greifer 110 mit mehreren Fingern 112. Am unteren Ende der Hand 78 befindet sich ein Polierkopf 114 mit einem Drehantrieb 116 für das Polierwerkzeug 88 sowie einer Kolben-Zylinder-Einheit 118 für eine axiale Auslenkung des Polierwerkzeugs 88 entlang einer Längsachse 120.

Auch hier versteht sich, dass die dargestellten Elemente nur äußerst schematisch zu verstehen sind und selbstverständlich auch andere Formen von Drehantrieben oder Linearantrieben eingesetzt werden können.

Fig. 6 zeigt in vergrößerter Darstellung und mit weiteren Einzelheiten das untere Ende der Hand 78. Dieses untere Ende ist gesamthaft von einem Gehäuse 128 umgeben.

Innerhalb des Gehäuses 128 befindet sich unterhalb des Drehantriebes 116 ein von diesem angetriebenes erstes Zahnrad 130, das mit einem zweiten, um die Achse 120 drehbaren Zahnrad 132 über einen Zahnriemen 134 verbunden ist. Das zweite Zahnrad 132 treibt einen Rotor 136 an, der über eine Vielzahl von Lagern in einer gehäusefesten Aufnahme 137 gelagert ist.

Der Rotor 136 weist an seinem unteren Ende eine Hülse 138 auf, in der ein Mehrkantrohr 140 unverdrehbar, jedoch axial verschiebbar angeordnet ist. Das Mehrkantrohr 140 ist in der Hülse 138 über Wälzlager 142 radial gelagert. Folglich dreht sich das Mehrkantrohr 140 mit der Hülse 138, kann sich aber nahezu reibungsfrei axial in der Hülse 138 bewegen.

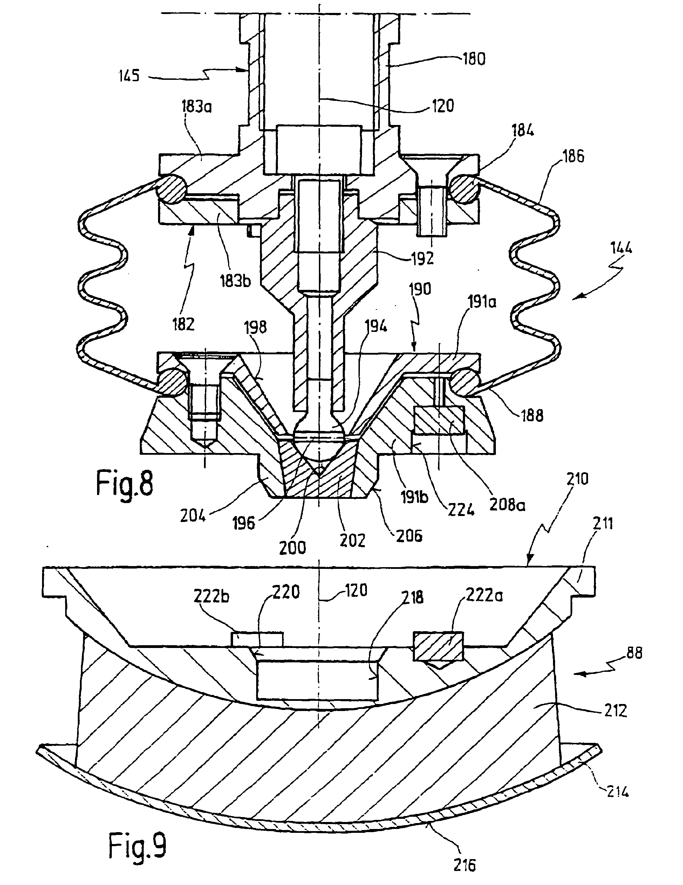

Der Rotor 136 läuft nach unten in einem unteren Ende 142 aus und bildet dort eine radiale Verschlussfläche. Durch diese Verschlussfläche hindurch erstreckt sich ein verjüngter Abschnitt 145 des Mehrkantrohrs 140 und ragt nach außen vor. An dessen freiem Ende wiederum ist ein Taumelteller 144 angeordnet, zu dem weitere Einzelheiten an Hand von Fig. 8 weiter unten erläutert werden.

Ein erster Balg 146 ist mit seinem oberen Rand am unteren Ende 143 des Rotors 136 befestigt und mit seinem unteren Rand an einem Flansch 147, der den unteren Bereich des vorstehenden Abschnitts 145 des Mehrkantrohrs 140 umgibt. Auf diese Weise wird erreicht, dass bei einer Axialbewegung des Abschnitts 145 in der vom unteren Ende 143 gebildeten Öffnung kein Schmutz von außen in den Bereich des Mehrkantrohrs 140 und insbesondere der Wälzlager 142 eindringen kann.

Schließlich ist eine umlaufende Schutzhülse 148 um den ersten Balg 146 herum angeordnet.

Das Mehrkantrohr 140 kann nach einer vorgegebenen Kraft-/Wegbeziehung in Richtung der Achse 120 bewegt werden. Hierzu dient die bereits erwähnte Kolben-Zylinder-Einheit 118.

Die Kolben-Zylinder-Einheit 118 wird vorzugsweise pneumatisch betätigt. Hierzu ist eine Druckluft-Drehdurchführung 150 am oberen Ende der Kolben-Zylinder-Einheit 118 vorgesehen, die eine Druckluftzufuhr zu der im Betrieb mit dem Rotor 136 umlaufenden Kolben-Zylinder-Einheit 118 gestattet. Von der Druckluft-Drehdurchführung 150 führt eine Leitung 152 zu einem Druckluft-Reservoir 154. Dessen Volumen ist in Fig. 6 mit V_{R} und dessen Betriebsdruck mit p_{R} bezeichnet.

Die Kolben-Zylinder-Einheit 118 ist mit einem so genannten Luftzylinder 160 versehen. Wie man insbesondere aus der Detaildarstellung gemäß Fig. 7 erkennt, weist der Luftzylinder 160 einen Glaszylinder 162 auf, in dem ein Kolben 164 mit minimalem Luftspalt 166 läuft. Über eine Koppelstange 168, deren oberes und unteres Ende mit einem Kugelkopf versehen ist, von denen der obere in Fig. 7 mit 170 bezeichnet ist, wird eine axiale Kraft übertragende Verbindung zwischen dem Kolben 164 und einem oberen Flansch 172 des Mehrkantrohrs 140 hergestellt.

In einem praktischen Ausführungsbeispiel hat der Kolben 164 einen Durchmesser von 16 mm und einen Hub von 5 mm. Das in Fig. 7 mit V_{A} bezeichnete Arbeitsvolumen des Kolbens 164 zwischen seinen extremen Arbeitsstellungen beträgt daher etwa 1 cm³.

Das Volumen V_{R} des Druckluft-Reservoirs 154 liegt hingegen bei 3.000 cm³, so dass das Verhältnis der Volumina in diesem Falle 3.000 : 1 ist. Der Betriebsdruck p_{R} beträgt beispielsweise 4 bis 5 bar. Hierdurch wird eine Betätigungskraft des Kolbens 164 im Bereich zwischen 50 und 100 N erzeugt.

Der Zylinder 162 besteht vorzugsweise, wie bereits erwähnt, aus Glas. Der Kolben 164 besteht vorzugsweise aus Graphit, wodurch eine optimale Reibpaarung entsteht, die über weite Temperaturbereiche einen minimalen Reibungskoeffizienten ergibt. In Folge des geringen Luftspalts 166 entsteht zwischen Kolben 164 und Glaszylinder 162 ein Luftlager, so dass der Kolben 164 praktisch reibungsfrei im Glaszylinder 162 läuft.

Mittels des Drehantriebes 116 wird der Rotor 136 in eine Drehbewegung von beispielsweise 1.000 min⁻¹ versetzt. Damit das Polierwerkzeug 88 an der Unterseite des Taumeltellers 144 der Änderung der Erhebung des vorzugsweise mit gleicher Drehzahl und gleichem Drehsinn rotierenden Glases 50 folgen kann, folgt das Polierwerkzeug 88 der sich drehenden Brillenglasoberfläche bei konstanter Anpresskraft mit Frequenzen von mehr als 50 Hz.

Die Reibungsarmut der für den Linearantrieb verantwortlichen Elemente ermöglicht zusammen mit dem sehr geringen Gewicht insbesondere des hohlen Mehrkantrohrs 140 eine präzise Regelung mit extrem kleinen Massenträgheitskräften.

Fig. 8 zeigt weitere Einzelheiten des Taumeltellers 144.

Ein unteres Ende 180 des Abschnitts 145 des Mehrkantrohrs 140 läuft in einen ersten Teller 182 aus, der als Klemmvorrichtung mit einer oberen Platte 183a und einer unteren Platte 183b versehen ist, die miteinander verschraubbar sind. Zwischen diesen Platten 183a, 183b ist ein oberer Rand 184 eines zweiten Balges 186 eingeklemmt, der ebenso wie der erste Balg 146 rotationssymmetrisch um die Achse 120 herum angeordnet ist.

Ein unterer Rand 188 des zweiten Balges 186 ist in einem zweiten Teller 190 gehalten, der gleichfalls als Klemmvorrichtung mit einer oberen Platte 191a sowie einer unteren Platte 191b ausgestaltet ist.

Der zweite Balg 186 umgibt ein Kugelgelenk. Dieses wird einerseits durch einen axialen Finger 192 gebildet, der sich in Verlängerung des unteren Endes 180 nach unten erstreckt und an seinem freien Ende einen Kugelkopf 194 mit einem Mittelpunkt 196 aufweist.

Das Gegenstück des Kugelgelenks wird durch eine kegelige Öffnung 198 in der oberen Platte 191a sowie eine Kugelpfanne 200 in der unteren Platte 191b gebildet. Die Kugelpfanne 200 ist vorzugsweise als Konus in einem Einsatz 202 in der unteren Platte 191b ausgebildet.

Wie man leicht aus Fig. 8 erkennen kann, kann somit der zweite Teller 190 relativ zum ersten Teller 182 eine Taumelbewegung ausführen, bei der die Kugelpfanne 200 um den Kugelkopf 194 herum verschwenkt.

Der zweite Balg 186 hat dabei drei Funktionen:

Zum einen dient der zweite Balg 186 zum Übertragen eines Drehmoments vom Mehrkantrohr 140 über dessen unteres Ende 180 auf den zweiten Teller 190, an dem das Polierwerkzeug 88 befestigt ist, wie noch erläutert werden wird.

Zum anderen erzeugt der zweite Balg 186 eine axial gerichtete Zugkraft, mit der der zweite Teller 190 elastisch nach oben gezogen wird, so dass der Kugelkopf 194 elastisch in der Kugelpfanne 200 gehalten wird. Auf diese Weise kann der zweite Teller 190 relativ zum ersten Teller 182 eine Taumelbewegung in weiten Winkelbereichen ausführen.

Schließlich bewirkt der zweite Balg 186 noch einen Schutz des Kugelgelenks gegen Verschmutzung.

Um das Polierwerkzeug 88 unten an den Taumelteller 144 ansetzen zu können, sind folgende Maßnahmen getroffen:

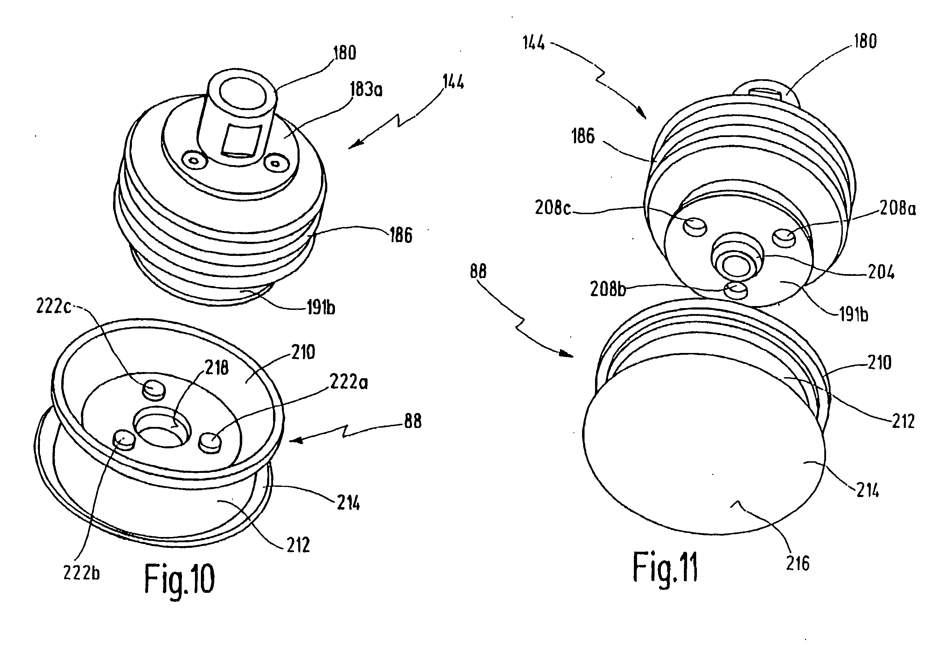

An der Unterseite des zweiten Tellers 190 befindet sich zunächst ein in der Achse 120 vorstehender Zapfen 204, der an seinem unteren Ende mit einem Konus 206 versehen ist. Ferner ist die Unterseite des zweiten Tellers 190 mit drei um 120° zueinander in Umfangsrichtung versetzten Permanentmagneten 208a, 208b, 208c versehen, wie besonders deutlich in Fig. 11 gezeigt ist.

Aus Fig. 9 ist zu erkennen, dass das Polierwerkzeug 88 einen dritten Teller 210 aufweist, der an seinem Umfang mit einem Ringflansch 211 versehen ist, auf den weiter unten im Zusammenhang mit der Erläuterung des Werkzeugmagazins (Fig. 18 bis 20) noch zurückzukommen sein wird.

Unterhalb des dritten Tellers 210 befindet sich eine elastische Lage 212, vorzugsweise ein weicher Schwamm. An dessen Unterseite ist das eigentliche Werkzeug 214 befestigt, das auch als Polierschale bezeichnet wird. Dessen untere Oberfläche 216, die Polieroberfläche, ist bei dem in Fig. 9 dargestellten Ausführungsbeispiel konvex ausgebildet, um konkave Glasoberflächen zu schleifen. Selbstverständlich kann die Oberfläche 216 auch konvex ausgebildet werden, um konkave Glasoberflächen zu bearbeiten.

Im Zentrum des dritten Tellers 210 befindet sich eine Aufnahme 218, die komplementär zum Zapfen 204 des Taumeltellers 144 ausgebildet ist. Insbesondere weist sie am oberen Ende eine Einführschräge 220 auf, die mit dem Konus 206 des Zapfens 204 zusammenarbeiten kann.

Weiterhin sind im dritten Teller 210 ebenfalls drei um 180° zueinander versetzte Permanentmagnete 222a, 222b, 222c angeordnet, die besonders anschaulich in Fig. 10 zu erkennen sind.

Wie leicht einzusehen ist, lässt sich das Polierwerkzeug 88 in einfacher Weise mit dem Taumelteller 144 verbinden, indem die in den Fig. 8 und 9 dargestellten Teile axial zusammengefügt werden. Dann greift der Zapfen 204 in die Aufnahme 218, und die Magnete 208/222 ziehen einander an und besorgen die notwendige axiale Haltekraft. Sie sind ferner im dargestellten Ausführungsbeispiel als Mitnahmen ausgebildet, so dass zwischen dem Taumelteller 144 und dem Polierwerkzeug 88 auch eine Drehmoment übertragende Verbindung gegeben ist, indem z.B. die Magnete 222 in Bohrungen 224 fassen, in die die Magnete 208 eingesetzt sind.

Es versteht sich dabei, dass die Permanentmagnete 208, 222 insoweit nur als Beispiele zu verstehen sind. Es können an dieser Stelle auch elektrisch betätigte Magnete oder Paarungen von Magneten und Weicheisenteilen mit gleichem Erfolg eingesetzt werden.

In den Fig. 12 und 17 sind weitere Einzelheiten des Greifers 110 dargestellt.

Fig. 12 zeigt, dass die Finger 112 des Greifers 110 aus einem Kern 230 und einem Mantel 232 bestehen, wobei der Kern 230 mechanisch stabil und hart und der Mantel 232 vorzugsweise weich ausgebildet ist.

Wichtig beim Greifer 110 ist, dass die Finger 112 das Glas 50 ausschließlich an dessen Umfang 236 ergreifen, also im Gegensatz zu im Stand der Technik bekannten Greifern die optische Oberfläche des Glases 50 nicht berührt wird.

Fig. 13 zeigt eine Konfiguration, bei der ein in der Draufsicht kreisförmiges Glas 50 mit vier Fingern 112a bis 112d gehalten wird, was gemäß der Darstellung in Fig. 14 auch bei einem Glas 50' mit in der Draufsicht elliptischer Form möglich ist.

Wie die Fig. 15 und 16 zeigen, gelingt dies im Wesentlichen auch beim Einsatz von drei Fingern 112a bis 112c.

Fig. 17 zeigt schließlich ein in der Draufsicht unregelmäßig geformtes Glas 50', das ebenfalls mit drei Fingern gehalten werden kann.

Die Fig. 18 bis 20 stellen weitere Einzelheiten des Werkzeugmagazins 64 dar.

Das Werkzeugmagazin 64 weist für jeden Schacht 86 zwei parallele Schienen 240a, 240b auf. Die Schienen 240a, 240b sind jeweils mit längs verlaufenden Gleitnuten 242a, 242b versehen, die einander zu weisend angeordnet sind. An dem in den Fig. 18 und 19 linken Ende sind Federstifte 244a, 244b vorgesehen, die im entspannten Zustand in die Gleitnuten 242a, 242b hinein reichen.

Die Schienen 240a, 240b sind gegenüber einem horizontalen Gestell 246 geneigt angeordnet, wie in Fig. 18 mit einem Winkel α eingetragen.

Die Polierwerkzeuge 88 sind in den Schienen 240a, 240b gehalten, indem die bereits erwähnten Ringflansche 211 der dritten Teller 210 der Polierwerkzeuge 88 (vgl. Fig. 9) in den Gleitnuten 242a, 242b laufen. Unter Schwerkrafteinfluss rutschen die Polierwerkzeuge 88 von selbst an das in Fig. 18 linke Ende der Schienen 240a, 240b, wo das jeweils unterste Polierwerkzeug 88 mittels der Federstifte 244a, 244b zurückgehalten wird.

Wie man aus Fig. 8 und Fig. 9 deutlich erkennen kann, hat der zweite Teller 190 am unteren Ende des Taumeltellers 144 einen wesentlich kleineren Durchmesser als der dritte Teller 210 an der Oberseite des Polierwerkzeugs 88, der auch in Fig. 19 von oben zu erkennen ist. Der Roboter 62 kann daher mit seiner Hand 78 in der Arbeitsstellung gemäß Fig. 5 in den Bereich des Werkzeugmagazins 64 fahren und den zweiten Teller 190 in den Zwischenraum zwischen den Schienen 240a, 240b einführen, bis der zweite Teller 190 auf dem dritten Teller 210 aufsetzt und die Teller 190, 210 unter der Wirkung der Magnete 208, 222 aneinander haften. Der Roboter 62 kann die Hand 78 nun in Achsrichtung des jeweiligen Schachtes 86 verfahren, so dass das jeweils vorderste Polierwerkzeug 88 die Rückhaltekraft der Federstifte 244a, 244b überwindet und aus den Gleitnuten 242a, 242b herausgezogen wird. Daraufhin rutscht das jeweils nächste Polierwerkzeug 88 unter Schwerkrafteinfluss nach.

Fig. 21 zeigt eine Brillenglasoberfläche 250 nach Art eines polaren Koordinatensystems. Dessen Hauptachsen sind zusätzlich mit x und y bezeichnet.

Mit einem Pfeil 252 ist die Drehrichtung des Glases 50 und damit der Brillenglasoberfläche 250 bezeichnet, wenn sich das Glas 50 in der Polierspindel 84 der Polierstation 54 befindet.

In Fig. 21 ist ferner die Oberfläche 216 des Polierwerkzeugs 88 eingetragen, die auf der Brillenglasoberfläche 250 aufliegt. Der Mittelpunkt der Oberfläche 216 ist mit 254 bezeichnet. Die polierende Oberfläche 216 dreht sich im gleichen Drehsinn wie die Brillenglasoberfläche 250, wie mit einem Pfeil 258 angedeutet. Auch die Drehzahlen sind im Wesentlichen gleich.

Mit 256 ist in Fig. 21 eine Ortskurve eingezeichnet, entlang der sich der Mittelpunkt 254 der polierenden Oberfläche 216 beim erfindungsgemäßen Poliervorgang bewegt.

Man erkennt deutlich, dass die Ortskurve 256 durch Überlagerung zweier periodischer Bewegungen entsteht. Die erste Bewegung verläuft entlang eines Durchmessers 260 der Brillenglasoberfläche 250, also in der Darstellung gemäß Fig. 21 in y-Richtung. Dieser ersten Bewegung ist eine zweite Bewegung überlagert, die in x-Richtung mit geringem Betrag oszilliert. Das Verhältnis der Frequenzen der Bewegungen in y-Richtung und in x-Richtung beträgt im dargestellten Ausführungsbeispiel 1 : 3. Es entsteht also eine klappsymmetrische Wellenlinie anstelle der im Stand der Technik bekannten geradlinigen Führung in äquidistanten Abständen.

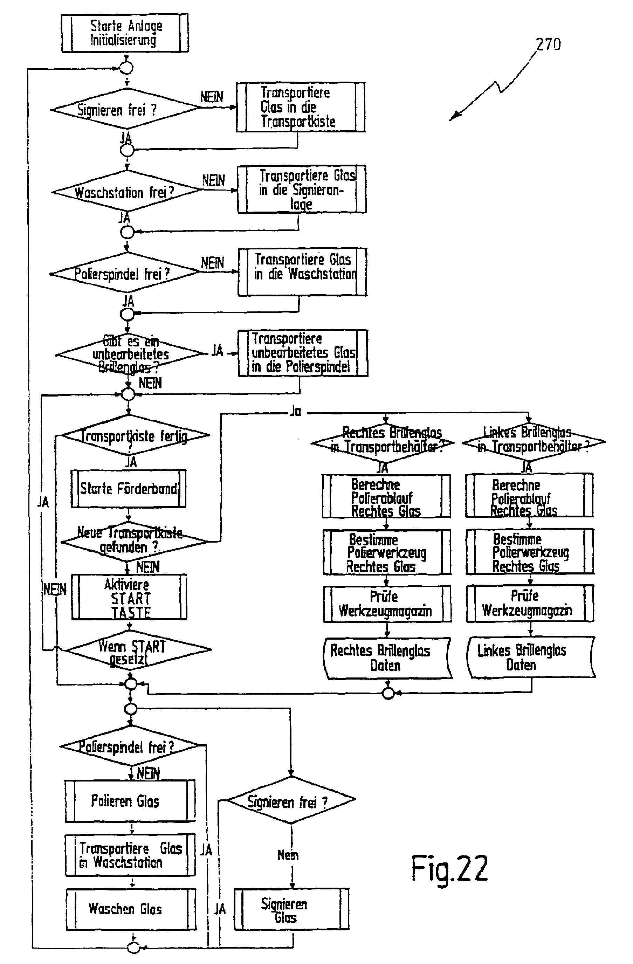

Schließlich zeigt Fig. 22 noch ein drittes Flussdiagramm 270, in dem die vorstehend beschriebenen Abläufe in der Fertigungszelle 40 noch einmal dargestellt sind. Danach werden die in den Transportkisten 48 befindlichen geblockten Gläser 50 nach folgendem Plan bearbeitet:
- wenn die Signierstation 58 nicht frei ist, transportiere das signierte Glas 50 zurück in seine Transportkiste 48
- wenn die Waschstation 56 frei ist, transportiere das gewaschene Glas 50 in die Signierstation 58
- wenn die Polierstation 54 frei ist, transportiere das polierte Glas 50 in die Waschstation 56
- wenn es ein unbearbeitetes Glas 50 gibt, transportiere das Glas 50 in die Polierstation 54
- wenn es eine fertige Transportkiste 48 gibt, starte das Förderband 44
- wenn nein, gehe zu Polieren
- wird eine neue Transportkiste 48 gefunden, dann berechne jeweils für das rechte und linke Glas 50 den Polierablauf sowie das Polierwerkzeug 88 und prüfe, ob im Werkzeugmagazin 64 ein Polierwerkzeug 88 vorhanden ist
- wenn keine neue Transportkiste 48 gefunden wird, dann aktiviere die Startfunktion
- wenn Start gedrückt wird, dann gehe zu Polieren
- wenn die Polierstation 54 nicht frei ist, dann poliere das Glas 50 gemäß dem berechneten Programm (Holen des Polierwerkzeuges 88, Polieren, Ablage des Polierwerkzeuges 88 im Abwurfmagazin 90)
- wenn die Signierstation 58 nicht frei ist, dann signiere das Glas 50 gemäß der Vorgabe
- nach dem Polieren transportiere das Glas 50 in die Waschstation 56
- wasche das Glas 50
- gehe zum Programmanfang

## Patentansprüche

1. Vorrichtung zum Herstellen von optischen Gläsern (50), bei der zum Polieren einer ersten Oberfläche (250) eines Glases (50) ein Polierwerkzeug (88) vorgesehen ist, das einerseits mit einer rotierenden zweiten Oberfläche (216) tangential über die erste Oberfläche (250) geführt und andererseits zum Kompensieren unterschiedlicher Erhebungen in der ersten Oberfläche (250) in einer Richtung senkrecht zu der ersten Oberfläche (250) zugestellt wird, mit einer rotatorisch angetriebenen, axial festen Hülse (138), und mit einem in der Hülse (138) angeordneten, axial zustellbaren, mit der Hülse (138) drehmoment-übertragend verbundenen Element, das an seinem aus der Hülse (138) heraus ragenden freien Endabschnitt mit dem Polierwerkzeug (88) verbunden ist und über ein nicht Drehmoment übertragendes Übertragungselement an eine lineare Verstelleinheit angeschlossen ist, **dadurch gekennzeichnet, dass** das Element hohl ausgebildet und das Übertragungselement kugelig gelagert ist.

2. Vorrichtung nach Anspruch 1, **dadurch gekennzeichnet, dass** das Element ein Rohr (140) ist.

3. Vorrichtung nach Anspruch 2, **dadurch gekennzeichnet, dass** das Rohr (140) ein Mehrkantrohr ist und dass das Mehrkantrohr mittels Wälzlagern (142) radial gelagert ist.

4. Vorrichtung nach einem der Ansprüche 1 bis 3, **dadurch gekennzeichnet, dass** die lineare Verstelleinheit als Kolben-Zylinder-Einheit (118) ausgebildet ist.

5. Vorrichtung nach einem der Ansprüche 1 bis 4, **dadurch gekennzeichnet, dass** das Übertragungselement eine Koppelstange (168) ist.

6. Vorrichtung nach Anspruch 5, **dadurch gekennzeichnet, dass** die Koppelstange an beiden Enden kugelig gelagert ist.

7. Vorrichtung nach einem der Ansprüche 4 bis 6, **dadurch gekennzeichnet, dass** die Kolben-Zylinder-Einheit (118) einen in einem Zylinder (162) luftgelagerten Kolben (164) aufweist.

8. Vorrichtung nach Anspruch 8, **dadurch gekennzeichnet, dass** der Zylinder (162) ein Glaszylinder und der Kolben (164) ein Graphitkolben ist.

9. Vorrichtung nach Anspruch 7 oder 8, **dadurch gekennzeichnet, dass** die Kolben-Zylinder-Einheit (118) mit einem Druckluft enthaltenden Arbeitsspeicher (154) eines ersten vorbestimmten Volumens (V_{R}) verbunden ist, dass der Kolben (164) im Zylinder (162) zwischen seinen extremen Arbeitsstellungen ein zweites vorbestimmtes Volumen (V_{A}) definiert und dass das erste Volumen (V_{R}) wesentlich größer als das zweite Volumen (V_{A}) ist.

10. Vorrichtung nach Anspruch 9, **dadurch gekennzeichnet, dass** das erste Volumen (V_{R}) mindestens 100 mal, vorzugsweise mindestens 1.000 mal so groß wie das zweite Volumen (V_{A}) ist.

11. Vorrichtung nach Anspruch 10, **dadurch gekennzeichnet, dass** das erste Volumen (V_{R}) etwa 1 cm³ und das zweite Volumen (V_{A}) etwa 3.000 cm³ beträgt.

12. Vorrichtung nach einem der Ansprüche 1 bis 11, **dadurch gekennzeichnet, dass** die Hülse (138) zum Ausführen der Zustellbewegung im Betrieb mit einem das Polierwerkzeug tragenden Abschnitt (145) oszillierend aus einem Ende (143) eines Gehäuses (128, 137, 143) austritt, und dass zwischen dem Ende (143) und dem Abschnitt (145) ein erster Balg (146) angeordnet ist.

13. Vorrichtung nach Anspruch 12, **dadurch gekennzeichnet, dass** der Abschnitt (145) einen ringförmigen Flansch (147) trägt und dass der erste Balg (146) den Flansch (147) mit dem Ende (143) verbindet.

14. Vorrichtung nach einem der Ansprüche 1 bis 13, **dadurch gekennzeichnet, dass** die Hülse (134) im Betrieb mit einem das Polierwerkzeug (88) tragenden Abschnitt (145) oszillierend aus einem Ende (143) eines Gehäuses (128, 137, 143) austritt, und dass der Abschnitt (145) mit einer gehäusefesten Schutzhülse (148) umgeben ist.

15. Vorrichtung nach Anspruch 12 und 14, **dadurch gekennzeichnet, dass** die Schutzhülse (148) den ersten Balg (146) umschließt.

16. Vorrichtung nach einem der Ansprüche 1 bis 15, **dadurch gekennzeichnet, dass** das Polierwerkzeug (88) an einem in Zustellrichtung entlang einer Achse (120) bewegbaren Übertragungselement gelenkig gelagert ist, und dass ein Taumelteller (144) vorgesehen ist, der über ein Kugelgelenk (194, 200) mit dem Übertragungselement verbunden ist, und dass der Taumelteller (144) mit dem Polierwerkzeug (88) koppelbar ist.

17. Vorrichtung nach Anspruch 16, **dadurch gekennzeichnet, dass** das Übertragungselement in einem Kugelkopf (194) ausläuft, dass das Polierwerkzeug (88) eine Kugelpfanne (200) aufweist, und dass das Polierwerkzeug (88) elastisch an dem Übertragungselement gehalten ist, wobei der Kugelkopf (194) elastisch in der Kugelpfanne (200) gehalten wird, derart, dass das Polierwerkzeug (88) eine Taumelbewegung relativ zum Übertragungselement ausführen kann.

18. Vorrichtung nach Anspruch 17, **dadurch gekennzeichnet, dass** das Übertragungselement axial in einem Finger (192) ausläuft, und dass der Kugelkopf (194) am freien Ende des Fingers (192) angeordnet ist.

19. Vorrichtung nach einem der Ansprüche 16 bis 18, **dadurch gekennzeichnet, dass** zum elastischen Halten des Polierwerkzeuges (88) ein zweiter, Drehmoment übertragender Balg (186) zwischen dem Übertragungselement und dem Polierwerkzeug (88) angeordnet ist.

20. Vorrichtung nach Anspruch 16 und 19, **dadurch gekennzeichnet, dass** der zweite Balg (186) den Finger (192) umgibt.

21. Vorrichtung nach einem der Ansprüche 17 bis 20, **dadurch gekennzeichnet, dass** die Kugelpfanne (200) kegelig ausgebildet ist.

22. Vorrichtung nach einem der Ansprüche 1 bis 21, **dadurch gekennzeichnet, dass** das Polierwerkzeug (88) über eine magnetische Kupplung (208, 222) mit einem Antrieb verbunden ist.

23. Vorrichtung nach Anspruch 22, **dadurch gekennzeichnet, dass** die magnetische Kupplung (208, 222) Permanentmagnete aufweist.

24. Vorrichtung nach Anspruch 22 oder 23, bei der das Polierwerkzeug (88) einerseits mit einer rotierenden zweiten Oberfläche (216) tangential über die erste Oberfläche (215) geführt und andererseits zum Kompensieren unterschiedlicher Erhebungen in der ersten Oberfläche (250) in einer Richtung senkrecht zu der ersten Oberfläche (250) zugestellt wird, wobei das Polierwerkzeug an einem in Zustellrichtung entlang einer Achse (120) bewegbaren Übertragungselement gelenkig gelagert ist, **dadurch gekennzeichnet, dass** ein Taumelteller (144) vorgesehen ist, der über ein Kugelgelenk (194, 200) mit dem Übertragungselement verbunden ist, und dass der Taumelteller (144) mit dem Polierwerkzeug (88) über die magnetische Kupplung (208, 222) gekoppelt ist.

25. Vorrichtung nach Anspruch 24, **dadurch gekennzeichnet, dass** das Übertragungselement in einem Kugelkopf (194) ausläuft, das Polierwerkzeug (88) eine Kugelpfanne (200) aufweist, und dass das Polierwerkzeug (88) elastisch an dem Übertragungselement gehalten ist, wobei der Kugelkopf (194) in der Kugelpfanne (200) elastisch gehalten wird, derart, dass das Polierwerkzeug (88) eine Taumelbewegung relativ zum Übertragungselement ausführen kann.

## Claims

1. An apparatus for producing optical glasses (50), in which, for polishing a first surface (250) of a glass (50) a polishing tool (88) is provided, which, on the one hand, is tangentially guided with a rotating, second surface (216) over the first surface (250), and, on the other hand, for compensating different elevations within the first surface (250), is fed-in in a direction perpendicular to the first surface (250), the apparatus comprising a rotationally driven and axially fixed sleeve (138), and an element being arranged within the sleeve (138), being adapted to be fed-in in an axial direction, and being connected with the sleeve (138) in a torque transmitting relationship, the element having a free terminal end protruding from the sleeve (138) and being connected to the polishing tool (88), and being connected via a non torque transmitting transmission element to a linear displacement unit, **characterized in that** the element is configured hollow and that the transmission element is journalled spherically.

2. The apparatus of claim 1, **characterized in that** the element is a tube (140).

3. The apparatus of claim 2, **characterized in that** the tube (140) is a polygonal tube, and that the polygonal tube is radially journalled by means of roller bearings (142).

4. The apparatus of any of claims 1 to 3, **characterized in that** the linear displacement unit is configured as a piston-cylinder unit (118).

5. The apparatus of any of claims 1 to 4, **characterized in that** the transmission element is a coupling rod (168).

6. The apparatus of claim 5, **characterized in that** the coupling rod is spherically journalled at both ends.

7. The apparatus of any of claims 4 to 6, **characterized in that** the piston-cylinder unit (118) comprises a piston (164) air-mounted within a cylinder (162).

8. The apparatus of claim 7, **characterized in that** the cylinder (162) is a glass cylinder, and the piston (164) is a graphite piston.

9. The apparatus of claim 7 or 8, **characterized in that** the piston-cylinder unit (118) is connected to a working reservoir (154) containing compressed air and having a first predetermined volume (V_{R}), the piston (164) defining a second predetermined volume (V_{A}) within the cylinder (162) between its extreme operational positions, the first volume (V_{R}) being much bigger than the second volume (V_{A}).

10. The apparatus of claim 9, **characterized in that** the first volume (V_{R}) is at least 100 times, preferably at least 1.000 times as big as the second volume (V_{A}).

11. The apparatus of claim 10, **characterized in that** the first volume (V_{R}) is essentially 1 cm³ and the second volume (V_{A}) is essentially 3,000 cm³.

12. The apparatus of any of claims 1, to 11 **characterized in that** the sleeve (138), when on operation, for executing the feeding-in movement, protrudes with a section (145) carrying the polishing tool from an end (143) of a housing (128, 137, 143) in an oscillating manner, wherein, further, a first bellows (146) is arranged between the end (143) and the section (145).

13. The apparatus of claim 12, **characterized in that** the section (145) carries an annular flange (147), the first bellows (145) connecting the flange (147) with the end (143).

14. The apparatus of any of claims 1 to 13, **characterized in that** the sleeve (134), when in operation, protrudes with a section (145) carrying the polishing tool (88) from an end (143) of a housing (128, 137, 143) in an oscillating manner, wherein, further, the section (145) is surrounded by a protective sleeve (148) being attached to the housing.

15. The apparatus of claims 12 and 14, **characterized in that** the protective sleeve (148) surrounds the first bellows (146)

16. The apparatus of any of claims 1 to 15, **characterized in that** the polishing tool (88) is pivotably journalled in a transmission element, the transmission element being movable in the feeding-in direction along an axis (120), a tumbling disk (144) being provided, the tumbling disk (144) being connected with the transmission element via a spherical joint (194, 200), and being adapted to be coupled to the polishing tool (88).

17. The apparatus of claim 16, **characterized in that** the transmission element has a ball head (194) as a terminal end, that the polishing tool (88) is provided with a ball socket (200) and that the polishing tool (88) is elastically held on the transmission element, wherein the ball head (194) is elastically held in the ball socket (200), such that the polishing tool (88) can execute a tumbling movement relative to the transmission element.

18. The apparatus of claim 17, **characterized in that** the transmission element has a finger (192) as an axial terminal end, and that the ball head (194) is arranged at the free end of the finger (192).

19. The apparatus of any of claims 16 to 18, **characterized in that** for elastically holding the polishing tool (88) a second, torque-transmitting bellows (186) is arranged between the transmission element and the polishing tool (88).

20. The apparatus of claims 16 and 19, **characterized in that** the second bellows (186) surrounds the finger (192).

21. The apparatus of any of claims 17 to 20, **characterized in that** the ball socket (200) is configured conical.

22. The apparatus of any of claims 1 to 21, **characterized in that** the polishing tool (88) is coupled to a drive via a magnetic clutch (208, 222).

23. The apparatus of claim 222, **characterized in that** the magnetic clutch (208, 222) is provided with permanent magnets.

24. The apparatus of claim 22 or 23,in which the polishing tool (88), on the one hand, is tangentially guided over the first surface (215), and, on the other hand, is for compensating different elevations within the first surface (250), is fed-in in a direction perpendicular to the first surface (250), wherein the polishing tool (88) is pivotably journalled in a transmission element, the transmission element being movable in the feeding-in direction along an axis (120), **characterized in that** a tumbling disk (144) is provided, the tumbling disk (144) being connected with the transmission element via a spherical joint(194, 200), and that the tumbling disk (144) is adapted to be coupled to the polishing tool (88) via the magnetic clutch (208, 222).

25. The apparatus of claim 24, **characterized in that** the transmission element has a ball head (194) as a terminal end, that the polishing tool (88) is provided with a ball socket (200), and that the polishing tool (88) is elastically held on the transmission element, wherein the ball head (194) is elastically held in the ball socket (200), such that the polishing tool (88) can execute a tumbling movement relative to the transmission element.

## Revendications

1. Dispositif de production de verres optiques (50), dans lequel lors du polissage d'une première surface (250) d'un verre (50), un outil de polissage (88) est prévu, lequel est d'une part amené avec une seconde surface tournante (216) de manière tangentielle au-dessus de la première surface (250) et d'autre part avancé pour compenser des élévations différentes dans la première surface (250) dans une direction verticale par rapport à la première surface (250), comprenant une gaine (138) fixe axiale entraînée de manière rotative et un élément connecté par transmission de couple de torsion à la gaine (138) réglable de manière axiale, disposé dans la gaine (138), lequel élément est connecté au niveau de sa section d'extrémité libre dépassant de la gaine (138) à l'outil de polissage (88) et raccordé via un élément de transmission ne transmettant pas de couple de torsion à un dispositif de réglage linéaire, **caractérisé en ce que** l'élément est creux et l'élément de transmission est monté avec une forme sphérique.

2. Dispositif selon la revendication 1, **caractérisé en ce que** l'élément est un tuyau (140).

3. Dispositif selon la revendication 2, **caractérisé en ce que** le tuyau (140) est un tuyau polygonal et **en ce que** le tuyau polygonal est monté radialement à l'aide de paliers à roulement (142).

4. Dispositif selon l'une quelconque des revendications 1 à 3, **caractérisé en ce que** le dispositif de réglage linéaire est constitué comme une unité de type piston-cylindre (118).

5. Dispositif selon l'une quelconque des revendications 1 à 4, **caractérisé en ce que** l'élément de transmission est une barre d'accouplement (168).

6. Dispositif selon la revendication 5, **caractérisé en ce que** la barre d'accouplement est montée au niveau des deux extrémités avec une forme sphérique.

7. Dispositif selon l'une quelconque des revendications 4 à 6, **caractérisé en ce que** l'unité de type piston-cylindre (118) comprend un piston pneumatique (164) dans un cylindre (162).

8. Dispositif selon la revendication 8, **caractérisé en ce que** le cylindre (162) est un cylindre en verre et le piston (164) est un piston en graphite.

9. Dispositif selon la revendication 7 ou 8, **caractérisé en ce que** l'unité de type piston-cylindre (118) est connectée à une mémoire centrale (154) contenant de l'air comprimé ayant un premier volume (V_{R}) prédéterminé, **en ce que** le piston (164) dans le cylindre (162) définit entre ses positions de travail extrêmes un second volume (V_{A}) prédéterminé et **en ce que** le premier volume (V_{R}) est substantiellement plus grand que le second volume (V_{A}).

10. Dispositif selon la revendication 9, **caractérisé en ce que** le premier volume (V_{R}) est au moins 100 fois, de préférence au moins 1 000 fois plus grand que le second volume (V_{A}).

11. Dispositif selon la revendication 10, **caractérisé en ce que** le premier volume (V_{R}) est d'environ 1 cm³ et le second volume (V_{A}) est d'environ 3 000 cm³.

12. Dispositif selon l'une quelconque des revendications 1 à 11, **caractérisé en ce que** la gaine (138) sort en oscillant d'une extrémité (143) d'un logement (128, 137, 143) lors de l'exécution du mouvement d'avance lors du fonctionnement avec une section (145) portant l'outil de polissage, et **en ce qu'**un premier soufflet est disposé entre l'extrémité (143) et la section (145).

13. Dispositif selon la revendication 12, **caractérisé en ce que** la section (145) porte une bride en forme d'anneau (147) et **en ce que** le premier soufflet (146) relie la bride (147) à l'extrémité (143).

14. Dispositif selon l'une quelconque des revendications 1 à 13, **caractérisé en ce que,** lors du fonctionnement avec une section (145) portant l'outil de polissage (88), la gaine (134) sort en oscillant d'une extrémité (143) d'un logement (128, 137, 143) et **en ce que** la section (145) est entourée d'une gaine de protection (148) fixée au logement.

15. Dispositif selon les revendications 12 et 14, **caractérisé en ce que** la gaine de protection (148) entoure le premier soufflet (146).

16. Dispositif selon l'une quelconque des revendications 1 à 15, **caractérisé en ce que** l'outil de polissage (88) est monté de manière articulée au niveau d'un élément de transmission pouvant être déplacé le long d'un axe (120) dans une direction d'avance, et **en ce qu'**un plateau culbutant (144) est prévu, lequel est connecté via une articulation sphérique (194, 200) à l'élément de transmission, et **en ce que** le plateau culbutant (144) peut être couplé à l'outil de polissage (88).

17. Dispositif selon la revendication 16, **caractérisé en ce que** l'élément de transmission se termine en un bouton sphérique (194), **en ce que** l'outil de polissage (88) présente un coussinet sphérique (200) et **en ce que** l'outil de polissage (88) est maintenu de manière élastique à l'élément de transmission, le bouton sphérique (194) étant maintenu de manière élastique dans le coussinet sphérique (200) de sorte que l'outil de polissage (88) peut effectuer un culbutage par rapport à l'élément de transmission.

18. Dispositif selon la revendication 17, **caractérisé en ce que** l'élément de transmission se termine axialement en un doigt (192) et **en ce que** le bouton sphérique (194) est disposé au niveau de l'extrémité libre du doigt (192).

19. Dispositif selon l'une quelconque des revendications 16 à 18, **caractérisé en ce qu'**un second soufflet (186) transmettant un couple de torsion est disposé entre l'élément de transmission et l'outil de polissage (88) afin de maintenir de manière élastique l'outil de polissage (88).

20. Dispositif selon les revendications 16 et 19, **caractérisé en ce que** le second soufflet (186) entoure le doigt (192).

21. Dispositif selon l'une quelconque des revendications 17 à 20, **caractérisé en ce que** le bouton sphérique (200) est formé de manière conique.

22. Dispositif selon l'une quelconque des revendications 1 à 21, **caractérisé en ce que** l'outil de polissage (88) est connecté à l'entraînement via un dispositif d'accouplement magnétique (208, 222).

23. Dispositif selon la revendication 22, **caractérisé en ce que** le dispositif d'accouplement magnétique (208, 222) est un aimant permanent.

24. Dispositif selon la revendication 22 ou 23, dans lequel l'outil de polissage (88) est d'une part amené avec une seconde surface tournante (216) de manière tangentielle au-dessus de la première surface (215) et d'autre part pour compenser des élévations différentes dans la première surface (250) dans une direction verticale par rapport à la première surface (250), l'outil de polissage étant monté de manière articulée à un élément de transmission pouvant être déplacé le long d'un axe (120) dans une direction d'avance, **caractérisé en ce qu'**un plateau culbutant (144) est prévu, lequel est connecté à l'élément de transmission via une articulation sphérique (194, 200), et **en ce que** le plateau culbutant (144) est couplé à l'outil de polissage (88) via le dispositif d'accouplement magnétique.

25. Dispositif selon la revendication 24, **caractérisé en ce que** l'élément de transmission se termine en un bouton sphérique (194), l'outil de polissage (88) présente un coussinet sphérique (200) et **en ce que** l'outil de polissage (88) est maintenu de manière élastique à l'élément de transmission, le bouton sphérique (194) étant maintenu de manière élastique dans le coussinet sphérique (200) de sorte que l'outil de polissage (88) peut effectuer un culbutage par rapport à l'élément de transmission.
